# EUROPEAN PATENT APPLICATION

(11) **EP 4 657 228 A1**
(43) Date of publication of application: **03.12.2025**
(21) Application number: 25179461.6
(22) Date of filing: 28.05.2025
(51) Int. Cl.: G06F 3/04845, G06F 3/0482, G06F 3/04842

(54) **METHOD, APPARATUS AND DEVICE FOR GENERATING EFFECT AND STORAGE MEDIUM**

(30) Priority: 29.05.2024 CN 202410685274
(71) Applicant: Beijing Zitiao Network Technology Co., Ltd., Beijing 100190 (CN); Lemon Inc., Grand Cayman, KY1-1205 (KY)
(72) Inventor: Liu, Shiyuan, Beijing, 100028 (CN); Zhang, Runze, Los Angeles, California, 90066 (US); Meng, Jie, Los Angeles, California, 90066 (US); Fuselier, Blake Garrett, Los Angeles, California, 90066 (US); Li, Peilin, Los Angeles, California, 90066 (US); Yick, Felicity Wing Tin, Los Angeles, California, 90066 (US); Shergill, Jagminder Singh, Los Angeles, California, 90066 (US); Tian, Runjia, Los Angeles, California, 90066 (US); Kim, Hai Quang, Los Angeles, California, 90066 (US); Huang, Xiaoke, Culver City, CA, 90230 (US); Guo, Huayang, Los Angeles, California, 90066 (US); Bhargav, Vybhav Achar, Los Angeles, California, 90066 (US); Lam, Joey, Culver City, CA, 90230 (US); Ni, Xiaoran, Los Angeles, California, 90066 (US); Wang, Xinyao, Los Angeles, California, 90066 (US); Chen, Guan-Bai, Culver City, CA, 90230 (US); Tang, Lexin, Los Angeles, California, 90066 (US)
(74) Representative: Grünecker Patent- und Rechtsanwälte PartG mbB

(57) **Abstract**

Embodiments of the disclosure relate to a method, an apparatus and a device for generating an effect and a computer-readable storage medium. The method proposed herein includes: presenting a session interface with a virtual object; obtaining a first message via the session interface, the first message configured to describe a to-be-generated effect; presenting a second message from the virtual object in the session interface, the second message including an interaction component corresponding to a target effect, and the target effect generated based on the first message; and presenting a preview window of the target effect in response to a first operation on the interaction component. In this way, the embodiments of the disclosure can generate and edit the effects by means of a dialogue, thereby improving efficiency of generating effects.

## Description

### FIELD

Example embodiments of the present disclosure generally relate to the field of computers, and in particular, relate to a method, an apparatus and a device for generating effect and a computer-readable storage medium.

### BACKGROUND

With development of computer technologies, the Internet has become an important platform of creating and sharing a media content. In a creation process of the media content, a video effect and a picture effect are creation means frequently used by a user in the creation process. Such effects can enrich the media content created by the user and improve interestingness of the content.

### SUMMARY

In a first aspect of the present disclosure, a method for generating an effect is provided. The method includes: presenting a session interface with a virtual object; obtaining a first message via the session interface, the first message configured to describe a to-be-generated effect; presenting, in the session interface, a second message from the virtual object, the second message comprising an interaction component corresponding to a target effect, and the target effect generated based on the first message; and presenting a preview window of the target effect in response to a first operation on the interaction component.

In a second aspect of the present disclosure, an apparatus for generating an effect is provided. The apparatus includes: an interface presenting module configured to present a session interface with a virtual object; a message obtaining module configured to obtain a first message via the session interface, the first message configured to describe a to-be-generated effect; a message presenting module configured to present, in the session interface, a second message from the virtual object, the second message comprising an interaction component corresponding to a target effect, and the target effect generated based on the first message; and a window presenting module configured to present a preview window of the target effect in response to a first operation on the interaction component.

In a third aspect of the present disclosure, an electronic device is provided. The device includes: at least one processing unit; and at least one memory coupled to the at least one processing unit and storing instructions for execution by the at least one processing unit, wherein the instructions, when executed by the at least one processing unit, cause the device to perform the method according to the first aspect.

In a fourth aspect of the present disclosure, a computer-readable storage medium is provided. The computer-readable storage medium stores a computer program, and the computer program is executable by a processor to implement the method according to the first aspect.

It should be understood that content described in this Summary is not intended to define key features or important features of the embodiments of the present disclosure, nor is it intended to limit the scope of the present disclosure. Other features of the present disclosure will become readily understood from the following description.

### BRIEF DESCRIPTION OF THE DRAWINGS

The above and other features, advantages and aspects of various embodiments of the present disclosure will become more apparent with reference to the following detailed description in conjunction with the drawings. In the drawings, the same or similar reference numerals denote the same or similar elements.
FIG. 1 illustrates a schematic diagram of an example environment capable of implementing embodiments according to the present disclosure.
FIGs. 2A to 2C illustrate example interfaces for generating effects according to some embodiments of the present disclosure.
FIG. 3 illustrates a flowchart of an example process of generating an effect according to some embodiments of the present disclosure.
FIG. 4 illustrates a schematic structural block diagram of an example apparatus for generating an effect according to some embodiments of the present disclosure.
FIG. 5 illustrates a block diagram of an electronic device capable of implementing various embodiments of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be implemented in various forms and should not be construed as being limited to the embodiments set forth herein; rather, these embodiments are provided to provide a more thorough and complete understanding of the present disclosure. It should be understood that the drawings and embodiments of the present disclosure are only for the illustrative purpose, and are not intended to limit the protection scope of the present disclosure.

It should be noted that any section/sub-section headings provided herein are not limiting. Various embodiments are described throughout this document, and any type of embodiment may be included under any section/sub-section. Further, the embodiments described in any section/sub-section may be combined in any manner with any other embodiments described in the same section/sub-section and/or in different section/subsections.

In the description of the embodiments of the present disclosure, the term "including" and similar terms thereof should be understood as open inclusion, that is, "including but not limited to". The term "based on" should be understood as "based at least in part on". The term "one embodiment" or "the embodiment" should be understood as "at least one embodiment". The term "some embodiments" should be understood as "at least some embodiments". The following may also include additional explicit and implicit definitions. The terms "first", "second", etc. may refer to different or the same objects. The following may also include additional explicit and implicit definitions.

Embodiments of the present disclosure may involve user data, obtaining and/or use of data, etc. These aspects all comply with relevant laws, regulations and provisions. In the embodiments of the present disclosure, collection, obtaining, processing, forwarding, use and the like of all data are performed on the premise that the user knows and confirms. Accordingly, when implementing the embodiments of the present disclosure, types of data or information that may be involved, a scope of use, usage scenarios, etc. should be notified to the user and the user's authorization should be obtained in an appropriate manner in accordance with relevant laws and regulations. The specific notification and/or authorization method may vary according to actual conditions and application scenarios, and the scope of the present disclosure is not limited in this regard.

In schemes in the present description and the embodiments, if personal information processing is involved, the processing is performed on the premise of having a legality basis (such as obtaining the consent of the subject of personal information, or being necessary for the performance of a contract, etc.), and the processing is performed only within a specified or agreed range. A user's refusal to personal information other than necessary information required for processing the basic function will not affect use of the basic function by the user.

As mentioned above, a video effect and a picture effect are creation means frequently used by a user in the creation process. Such effects can enrich the media content created by the user and improve interestingness of the content. Traditionally, the user needs to spend much time learning how to use effect creation tools, which makes effect creation a complex process for ordinary users.

The embodiments of the present disclosure provide a scheme for generating an effect. The scheme may include: presenting a session interface with a virtual object; obtaining a first message via the session interface, the first message configured to describe a to-be-generated effect; presenting a second message from the virtual object in the session interface, the second message including an interaction component corresponding to a target effect, and the target effect generated based on the first message; and presenting a preview window of the target effect in response to a first operation on the interaction component.

In this way, the embodiments of the present disclosure can generate and edit effects through a dialogue, reduce a learning cost of the user, and improve efficiency of generating effects.

Various example implementations of the scheme are described in detail below in conjunction with the drawings.

### Example Environment

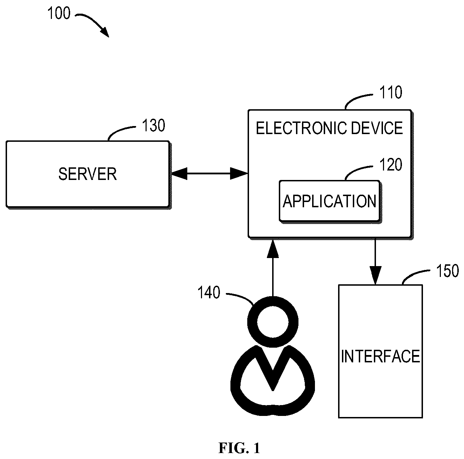

FIG. 1 illustrates a schematic diagram of an example environment 100 capable of implementing embodiments of the present disclosure. As shown in FIG. 1, the example environment 100 may include an electronic device 110.

In the example environment 100, the electronic device 110 may run an application 120 that supports interface interaction. The application 120 may be any appropriate type of application for interface interaction, examples of which may include, but are not limited to: an effect edit application. The user 140 may interact with the application 120 via the electronic device 110 and/or attached devices thereof.

In the environment 100 of FIG. 1, if the application 120 is active, the electronic device 110 may present an interface 150 that supports interface interaction through the application 120.

In some embodiments, the electronic device 110 communicates with a server 130 to implement provision of services for the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable gaming terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination thereof, and including accessories and peripherals of these devices, or any combination thereof. In some embodiments, the electronic device 110 can also support any type of interface for a user (such as a "wearable" circuitry, etc.).

The server 130 may be an independent physical server, a server cluster or a distributed system composed of a plurality of physical servers, or a cloud server providing basic cloud computing services such as a cloud service, a cloud database, cloud computing, a cloud function, cloud storage, a network service, cloud communication, a middleware service, a domain name service, a security service, a content distribution network, and a big data and artificial intelligence platform. The server 130 may include, for example, a computing system/server such as a mainframe, an edge computing node, or a computing device in a cloud environment. The server 130 may provide a background service for the application 120 that supports a virtual scene in the electronic device 110.

A communication connection may be established between the server 130 and the electronic device 110. The communication connection may be established via a wired manner or a wireless manner. The communication connection may include, but is not limited to, a Bluetooth connection, a mobile network connection, a universal serial bus (USB) connection, a wireless fidelity (WiFi) connection, and the like, and the embodiments of the present disclosure are not limited in this regard. In the embodiments of the present disclosure, the server 130 and the electronic device 110 may implement signaling interaction through the communication connection therebetween.

It should be understood that structures and functions of various elements in the environment 100 are described for illustrative purposes only, and do not imply any limitation on the scope of the present disclosure.

Some example embodiments of the present disclosure will be described below with continued reference to the drawings.

### Example Interaction

The process of generating an effect according to embodiments of the present disclosure will be described below with reference to the drawings.

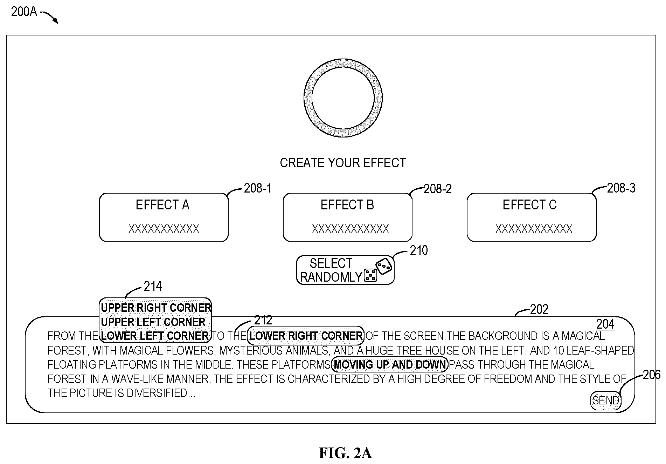

FIGs. 2A to 2C illustrate example interfaces 200A to 200C according to some embodiments of the present disclosure. The interfaces 200A to 200C may be provided by the electronic device 110 shown in FIG. 1, for example.

As shown in FIG. 2A, the interface 200A may be, for example, a session interface between a user and a virtual object. In some embodiments, the virtual object may include any appropriate processing entity that supports generating and/or editing the effect by means of a prompt item or the like. In some scenes, the virtual object may also be referred to as a virtual entity, and examples of the virtual object may include, but are not limited to, an agent, a bot, or other processing entities that support triggering effect edit by using a dialogue. Such virtual objects may, for example, be implemented with an appropriate machine learning mode to generate and/or edit the effect accordingly based on the received prompt item. The present disclosure is not intended to limit the specific construction manner of the virtual object.

In some embodiments, as shown in FIG. 2A, the session interface 200A may include a message presentation area and an input control 202. The input control 202 may be used to input any appropriate type of message sent to the virtual object, such as a text message and a voice message.

In some embodiments, an input message of the user may be provided directly to the virtual object, or may be provided to the virtual object after appropriate processing, as a corresponding prompt item.

In some embodiments, to improve input efficiency of the prompt item, the electronic device 110 may further present a set of candidate templates in the session interface 200A, for example, a template 208-1, a template 208-2, and a template 208-3 (separately or collectively referred to as a template 208). The electronic device 110 may also present descriptive information of each template 208 in association, for example, an introduction text about a function of an effect corresponding to the template 208.

As an example, the electronic device 110 may receive a selection of the template 208-1, and may correspondingly display a preset prompt item 204 corresponding to the template 208-1 in the input control 202.

Further, the user may, for example, edit the preset prompt item 204 and/or directly use the preset prompt item 204 as the message input to the virtual object. For example, the user may delete a part of a text in the preset prompt item 204, modify a part of the text, add an additional text, or the like.

In some embodiments, as shown in FIG. 2A, the electronic device 110 may further display one or more parameters, for example, a parameter 212, in the preset prompt item 204 with a target style. Further, the electronic device 110 may receive a preset operation (for example, a click operation or a hover operation) of the user on the parameter 212, and may correspondingly display an interaction component 214 to display a set of candidate parameters that may be used to replace the parameter 212. For example, candidate values for the parameter 212 may include "upper right corner", "upper left corner", and "lower left corner".

Further, the user may edit the preset prompt item 204 by, for example, selecting the "upper right corner" in the interaction component 214, to generate a description text meeting an effect creation demand of the user.

In some embodiments, the electronic device 110 may also provide a refresh component 210, for example. The electronic device 110 may, for example, receive a trigger from the user on the refresh component 210, and display a new set of candidate templates correspondingly. For example, templates 208-1 to 208-3 may be replaced with three other candidate templates.

Based on this manner, the embodiments of the present disclosure can help the user more efficiently edit the message for describing the effect, thereby improving efficiency of generating the effect. In addition, such a preset prompt item may have a relatively good generation quality, for example. In this way, the embodiments of the present disclosure may further provide quality of effect generation.

In some embodiments, the user freely inputs the message for describing the effect via the input control 202, or the user may input the message for describing the effect based on editing the preset prompt item 204. Further, the electronic device 110 may receive a user selection of a control 206 to trigger sending of the input message to the virtual object used for generating the effect.

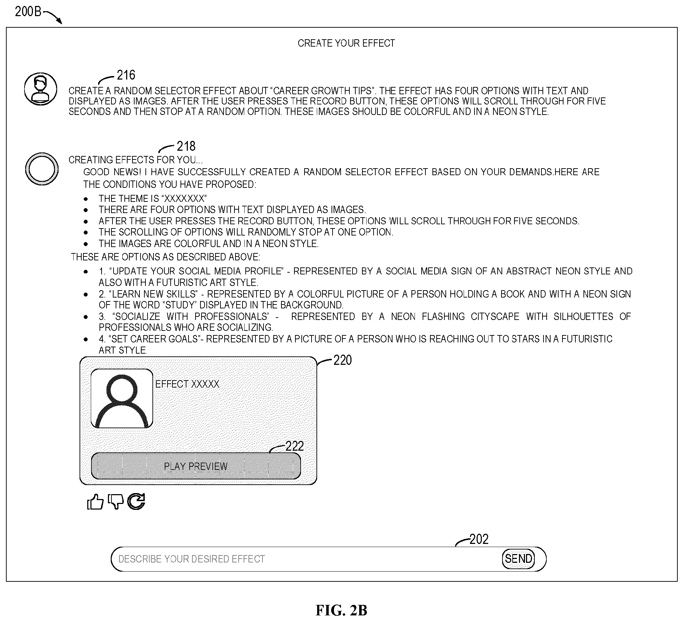

Further, as shown in FIG. 2B, the electronic device 110 may present a first message 216 from the user in the session interface 200B. Further, the electronic device 110 may also present a second message 218 from the virtual object.

In some embodiments, such a second message 218 may include, for example, descriptive information for describing understanding of the first message 216 input by the user and/or describing the generated target effect.

In some embodiments, such descriptive information may be generated based on a preset information template, and different types of effects may correspond to different types of information templates. Accordingly, an applicable information template may be determined based on characteristics of the generated target effect, and a description text about the target effect may be generated according to the information template.

In some embodiments, the second message 218 may further include an interaction component 220 corresponding to the target effect generated by the virtual object. As discussed above, a corresponding target effect may be generated by the virtual object based on the received first message 216.

In some embodiments, such an interaction component 220 may display a text identifier and/or an image identifier of the generated target effect. The text identifier may include, for example, a name of the target effect, and the image identifier may include, for example, an icon of the target effect. Alternatively, or additionally, the interaction component 220 may also display other descriptive information of the target effect, for example, file size, creation date, etc.

In some embodiments, such a text identifier and/or an image identifier may be generated by the virtual object and/or other appropriate model based on the first message 216. Alternatively, such a text identifier and/or an image identifier may also be determined based on a configuration operation of the user, for example. For example, the user may specify a name and an icon of an effect to be generated before the effect generation is triggered.

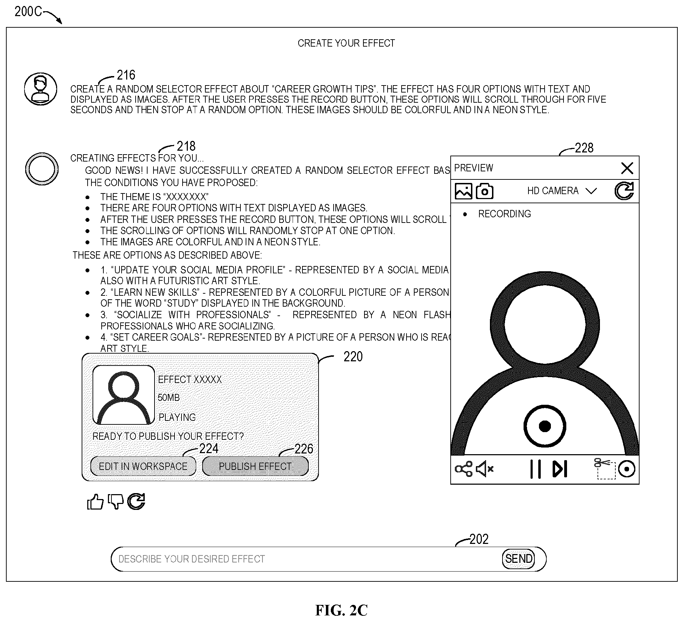

Further, as shown in FIG. 2B, the interaction component 220 may further include a preview entry 222. After receiving a selection of the preview entry 222, as shown in FIG. 2C, the electronic device 110 may display a preview window 228 of the target effect. The preview window 228 may, for example, call a corresponding image acquisition device to provide a real-time preview of the effect.

Therefore, the embodiments of the present disclosure can help the user intuitively perceive an application effect of the effect generated by the virtual object.

Further, as shown in FIG. 2C, the interaction component 220 may also provide an edit entry 224 and a publishing entry 226correspondingly. In some examples, in response to receiving the selection of the edit entry 224, the electronic device 110 may import the generated target effect into an effect edit tool to present an edit interface of the target effect, thereby supporting further editing of the target effect.

In other examples, in response to receiving a selection of the publishing entry 226, the electronic device 110 may publish the target effect generated by the virtual object, so that other users can obtain and use the effect.

In some embodiments, the electronic device 110 may further support the user to further adjust the generated target effect by inputting a new message. Specifically, the electronic device 110 may obtain a third message, for example, via the input control 202. Such a third message may, for example, describe an edit request for the generated target effect. For example, the third message may indicate to modify a style of an animation and an effect of a picture in the target effect.

Further, the electronic device 110 may correspondingly present a fourth message from the virtual object in the session interface 200C. Similarly, the fourth message may include descriptive information about the edited target effect, and an interaction component corresponding to the edited target effect, to support the user previewing the edited effect, editing the edited effect in the edit tool, and/or publishing the edited effect.

In some embodiments, when the virtual object generates a new effect, the electronic device 110 may automatically switch the preview window 228 to display a preview content about the new effect.

Based on the process described above, the embodiments of the present disclosure can generate, edit, and preview the effect in a dialogue manner, so that the user can express a demand for generating and/or editing the effect through natural language, which can greatly reduce learning costs of the user and improve generation efficiency and generation quality of the effect.

### Example Process

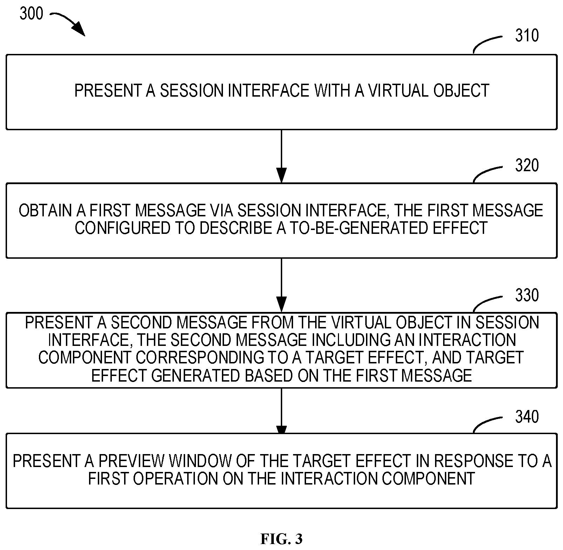

FIG. 3 illustrates a flowchart of an example process 300 of generating an effect according to some embodiments of the present disclosure. The process 300 may be implemented by the electronic device 110. The process 300 is described below with reference to FIG. 1.

As shown, at block 310, the electronic device 110 presents a session interface with a virtual object.

At block 320, the electronic device 110 obtains a first message via the session interface, the first message configured to describe a to-be-generated effect.

At block 330, the electronic device 110 presents a second message from the virtual object in the session interface, the second message including an interaction component corresponding to a target effect, and the target effect generated based on the first message.

At block 340, the electronic device 110 presents a preview window of the target effect in response to a first operation on the interaction component.

In some embodiments, the second message further includes descriptive information about the generated target effect.

In some embodiments, the descriptive information corresponds to a target information template, and the target information template is determined based on a type of the generated target effect.

In some embodiments, the process 300 further includes: presenting an edit interface of the target effect in response to a second operation on the interaction component; and/or, publishing the target effect in response to a third operation on the interaction component.

In some embodiments, the interaction component displays at least one of: a text identifier of the target effect; an image identifier of the target effect; and a file size of the target effect.

In some embodiments, the text identifier and/or the image identifier are generated based on the first message by a target model.

In some embodiments, obtaining a first message via the session interface includes: presenting a first set of candidate templates in the session interface; displaying, based on a selection of a target template in the first set of candidate templates, a preset prompt item corresponding to the target template in an input control of the session interface; and obtaining the first message determined based on the preset prompt item.

In some embodiments, the process 300 further includes: replacing the set of candidate templates in the session interface with a second set of candidate templates in response to receiving a predetermined request.

In some embodiments, displaying a preset prompt item corresponding to the target template in an input control of the session interface includes: displaying, in the input control, a set of parameters in the preset prompt item in a target style.

In some embodiments, obtaining the first message determined based on the preset prompt item includes: presenting a set of candidate parameters in response to a preset operation on a first parameter in the set of parameters; replacing the first parameter in the preset prompt item with a second parameter based on a selection of the second parameter in the set of candidate parameters; and obtaining the first message determined based on the replaced preset prompt item.

In some embodiments, the process 300 further includes: obtaining a third message via the session interface, the third message configured to describe an edit request for the target effect; and presenting a fourth message from the virtual object in the session interface, the fourth message being associated with the edited target effect.

### Example Apparatus and Device

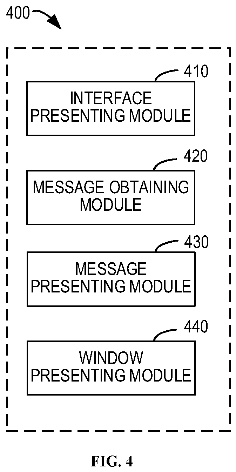

The embodiments of the present disclosure further provide a corresponding apparatus for implementing the above method or process. FIG. 4 illustrates a schematic structural block diagram of an example apparatus 400 for generating an effect according to some embodiments of the present disclosure. The apparatus 400 may be implemented as or included in the electronic device 110. Various modules/components in the apparatus 400 may be implemented by hardware, software, firmware, or any combination thereof.

As shown in FIG. 4, the apparatus 400 includes: an interface presenting module 410 configured to present a session interface with a virtual object; a message obtaining module 420 configured to obtain a first message via the session interface, the first message configured to describe a to-be-generated effect; a message presenting module 430 configured to present a second message from the virtual object in the session interface, the second message including an interaction component corresponding to a target effect, the target effect generated based on the first message; and a window presenting module 440 configured to present a preview window of the target effect in response to a first operation on the interaction component.

In some embodiments, the message presenting module 430 is further configured such that: the second message further includes descriptive information about the generated target effect.

In some embodiments, the message presenting module 430 is further configured such that: the descriptive information corresponds to a target information template, and the target information template is determined based on a type of the generated target effect.

In some embodiments, the message presenting module 430 is further configured to: present an edit interface of the target effect in response to a second operation on the interaction component; and/or publish the target effect in response to a third operation on the interaction component.

In some embodiments, the message presenting module 430 is further configured such that: the interaction component displays at least one of: a text identifier of the target effect; an image identifier of the target effect; and a file size of the target effect.

In some embodiments, the message presenting module 430 is further configured such that: the text identifier and/or the image identifier are generated based on the first message by a target model.

In some embodiments, the message obtaining module 420 is further configured such that: obtaining the first message via the session interface includes: presenting a first set of candidate templates in the session interface; displaying, based on a selection of a target template in the first set of candidate templates, a preset prompt item corresponding to the target template in an input control of the session interface; and obtaining the first message determined based on the preset prompt item.

In some embodiments, the message obtaining module 420 is further configured to: replace the set of candidate templates in the session interface with a second set of candidate templates in response to receiving a predetermined request.

In some embodiments, the message obtaining module 420 is further configured such that: displaying the preset prompt item corresponding to the target template in an input control of the session interface includes: displaying, in the input control a set of parameters in the preset prompt item in a target style.

In some embodiments, the message obtaining module 420 is further configured to obtaining the first message determined based on the preset prompt item includes: presenting a set of candidate parameters in response to a preset operation on a first parameter in the set of parameters; replacing the first parameter in the preset prompt item with a second parameter based on a selection of the second parameter in the set of candidate parameters; and obtaining the first message determined based on the replaced preset prompt item.

In some embodiments, the message obtaining module 420 is further configured to: obtain a third message via the session interface, the third message configured to describe an edit request for the target effect; and present a fourth message from the virtual object in the session interface, the fourth message being associated with the edited target effect.

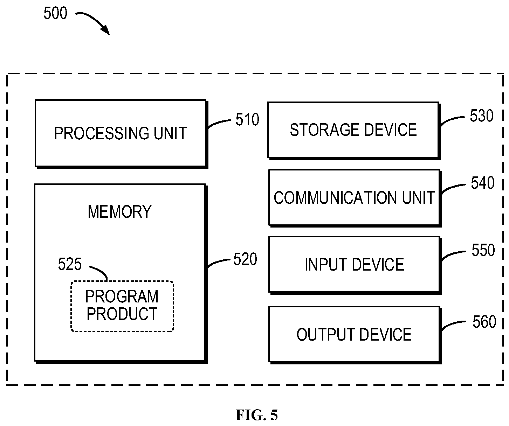

FIG. 5 illustrates a block diagram of an electronic device 500 capable of implementing one or more embodiments of the present disclosure. It should be understood that the electronic device 500 shown in FIG. 5 is merely illustrative and should not constitute any limitation on the function and scope of the embodiments described herein. The electronic device 500 shown in FIG. 5 may be used to implement the electronic device 110 of FIG. 1.

As shown in FIG. 5, the electronic device 500 is in a form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and can execute various kinds of processing according to programs stored in the memory 520. In a multi-processor system, a plurality of processing units executes computer-executable instructions in parallel to improve parallel processing capability of the electronic device 500.

The electronic device 500 typically includes a plurality of computer storage media. Such medium may be any retrievable medium accessible to the electronic device 500, including but not limited to volatile and non-volatile media, and removable and non-removable media. The memory 520 may be volatile memory (e.g., register, cache, random access memory (RAM)), non-volatile memory (e.g., read-only memory (ROM), electrically erasable programmable read-only memory (EEPROM), and flash memory), or some combination thereof. The storage device 530 may be a removable or non-removable medium and may include a machine-readable medium, such as a flash drive, a magnetic disk, or any other medium, which may be capable of storing information and/or data and which may be accessed within the electronic device 500.

The electronic device 500 may further include an additional removable/non-removable and volatile/non-volatile storage medium. Although not shown in FIG. 5, a magnetic disk drive for reading from or writing to a removable and non-volatile magnetic disk (e.g., a "floppy disk") and an optical disk drive for reading from or writing to a removable and non-volatile optical disk may be provided. In these cases, each drive may be connected to a bus (not shown) via one or more data medium interfaces. The memory 520 may include a computer program product 525 having one or more program modules configured to execute various methods or actions of various embodiments of the present disclosure.

The communication unit 540 communicates with other electronic devices through a communication medium. Additionally, functionality of the components of the electronic device 500 may be implemented in a single computing cluster or a plurality of computing machines capable of communicating through a communication connection. Therefore, the electronic device 500 may operate in a networked environment using logical connections to one or more other servers, a network personal computer (PC), or the other network node.

The input device 550 may be one or more input devices, such as a mouse, a keyboard, and a trackball. The output device 560 may be one or more output devices, such as a display, a speaker, and a printer. The electronic device 500 may also communicate with one or more external devices (not shown) such as a storage device, a display device, with one or more devices that enable a user to interact with the electronic device 500, or with any device (e.g., a network card, or a modem) that enables the electronic device 500 to communicate with one or more other electronic devices as needed, through the communication unit 540. Such communication may be executed via an input/output (I/O) interface (not shown).

According to an example implementation of the present disclosure, a computer-readable storage medium is provided, on which computer-executable instructions are stored. The computer-executable instructions are executed by a processor to implement the method described above. According to an example implementation of the present disclosure, a computer program product is also provided. The computer program product is tangibly stored on a non-transitory computer-readable medium and includes computer-executable instructions, and the computer-executable instructions are executed by a processor to implement the method described above.

Various aspects of the present disclosure are described herein with reference to flowchart and/or block diagrams of the method, the apparatus, the device, and the computer program product implemented according to the present disclosure. It should be understood that each block in the flowchart and/or block diagrams and combinations of the blocks in the flowchart and/or block diagrams may be implemented by the computer-readable program instructions.

These computer-readable program instructions may be provided to a processing unit of a general-purpose computer, a special-purpose computer, or other programmable data processing apparatus to produce a machine, so that the instructions, when executed by the processing unit of the computer or other programmable data processing apparatus, produce an apparatus for implementing the functions/actions specified in one or more blocks in the flowchart and/or block diagrams. These computer-readable program instructions may also be stored in a computer-readable storage medium, which enables a computer, programmable data processing apparatus, and/or other devices to work in a particular manner, so that the computer-readable medium having instructions stored thereon includes an article of manufacture including instructions for implementing various aspects of the functions/actions specified in one or more blocks in the flowchart and/or block diagrams.

The computer-readable program instructions may be loaded onto a computer, other programmable data processing apparatus, or other device so that a series of operational steps are executed on the computer, other programmable data processing apparatus, or other device to produce a computer-implemented process. Therefore, the instructions executed on the computer, other programmable data processing apparatus, or other device implement the functions/actions specified in one or more blocks in the flowchart and/or block diagrams.

The flowchart and block diagrams in the drawings show the possible architecture, functionality, and operation of the system, the method, and the computer program product according to various implementations of the present disclosure. In this regard, each block in the flowchart or block diagrams may represent a module, a program segment, or a part of an instruction that includes one or more executable instructions for implementing specified logical functions. In some alternative implementations, functions noted in the blocks may also occur in a different order from that noted in the drawings. For example, two consecutive blocks may actually be executed substantially in parallel, or may sometimes be executed in a reverse order, depending on the functionality involved. It should also be noted that each block in the block diagrams and/or flowchart, and combinations of the blocks in the block diagrams and/or flowchart, may be implemented with a dedicated hardware-based system that executes specified functions or actions, or may be implemented with a combination of dedicated hardware and computer instructions.

Various implementations of the present disclosure have been described above, and the above description is illustrative, not exhaustive, and is not limited to the disclosed implementations. Many modifications and variations will be apparent to those of ordinary skill in the art without departing from the scope of the described implementations. The terms used in this document are selected to best explain the principles of each implementation, practical application or improvement of technology in the market, or to enable other ordinary technicians in this technical field to understand the various implementations disclosed herein.

## Claims

1. A method (300) for generating an effect, comprising:
presenting (310) a session interface with a virtual object;
obtaining (320) a first message via the session interface, the first message configured to describe a to-be-generated effect;
presenting (330), in the session interface, a second message from the virtual object, the second message comprising an interaction component corresponding to a target effect, and the target effect generated based on the first message; and
presenting (340) a preview window of the target effect in response to a first operation on the interaction component.

2. The method (300) according to claim 1, wherein the second message further comprises descriptive information about the generated target effect.

3. The method (300) according to claim 2, wherein the descriptive information corresponds to a target information template, and the target information template is determined based on a type of the generated target effect.

4. The method (300) according to claim 1, further comprising:
presenting an edit interface of the target effect in response to a second operation on the interaction component; and/or
publishing the target effect in response to a third operation on the interaction component.

5. The method (300) according to claim 1, wherein the interaction component displays at least one of:
a text identifier of the target effect;
an image identifier of the target effect; and
a file size of the target effect.

6. The method (300) according to claim 5, wherein the text identifier and/or the image identifier are generated based on the first message by a target model.

7. The method (300) according to claim 1, wherein obtaining (320) the first message via the session interface comprises:
presenting a first set of candidate templates in the session interface;
displaying, based on a selection of a target template in the first set of candidate templates, a preset prompt item corresponding to the target template in an input control of the session interface; and
obtaining the first message determined based on the preset prompt item.

8. The method (300) according to claim 7, further comprising:
replacing the set of candidate templates in the session interface with a second set of candidate templates in response to receiving a predetermined request.

9. The method (300) according to claim 7, wherein displaying the preset prompt item corresponding to the target template in the input control of the session interface comprises:
displaying, in the input control, a set of parameters in the preset prompt item in a target style.

10. The method (300) according to claim 7, wherein obtaining the first message determined based on the preset prompt item comprises:
presenting a set of candidate parameters in response to a preset operation on a first parameter in the set of parameters;
replacing the first parameter in the preset prompt item with a second parameter based on a selection of the second parameter in the set of candidate parameters; and
obtaining the first message determined based on the replaced preset prompt item.

11. The method (300) according to claim 1, further comprising:
obtaining a third message via the session interface, the third message configured to describe an edit request for the target effect; and
presenting a fourth message from the virtual object, in the session interface, the fourth message being associated with the edited target effect.

12. An apparatus (400) for generating an effect, comprising:
an interface presenting module (410) configured to present a session interface with a virtual object;
a message obtaining module (420) configured to obtain a first message via the session interface, the first message configured to describe a to-be-generated effect;
a message presenting module (430) configured to present, in the session interface, a second message from the virtual object, the second message comprising an interaction component corresponding to a target effect, and the target effect generated based on the first message; and
a window presenting module (440) configured to present a preview window of the target effect in response to a first operation on the interaction component.

13. An electronic device (500), comprising:
at least one processing unit (510); and
at least one memory (520) coupled to the at least one processing unit (510) and storing instructions for execution by the at least one processing unit (510), wherein the instructions, when executed by the at least one processing unit (510), cause the electronic device (500) to perform the method according to any of claims 1 to 11.

14. A computer-readable storage medium having a computer program stored thereon, wherein the computer program is executable by a processor to implement the method according to any of claims 1 to 11.
